# EUROPÄISCHE PATENTSCHRIFT

(11) **EP 4 374 063 B1**
(45) Veröffentlichungstag und Bekanntmachung des Hinweises auf die Patenterteilung: **04.12.2024**
(21) Anmeldenummer: 22730201.5
(22) Anmeldetag: 23.05.2022
(51) Int. Cl.: F03B 15/20, F03B 15/22

(54) **HYDRAULISCHE MASCHINE VOM TYP PELTON UND BETRIEBSVERFAHREN**
PELTON-TYPE HYDRAULIC MACHINE, AND OPERATING METHOD
MACHINE HYDRAULIQUE DE TYPE PELTON ET PROCÉDÉ POUR LA FAIRE FONCTIONNER

(30) Priorität: 22.07.2021 DE 102021118978
(43) Veröffentlichungstag der Anmeldung: 29.05.2024
(73) Patentinhaber: Voith Patent GmbH, 89522 Heidenheim (DE)
(72) Erfinder: SCHABASSER, Martin, 3123 Pfaffing (AT); POXHOFER, Stefan, 3142 Murstetten (AT)
(74) Vertreter: Voith Patent GmbH - Patentabteilung
(86) Internationale Anmeldenummer: PCT/EP2022/063830
(87) Internationale Veröffentlichungsnummer: WO 2023/001429

(56) Entgegenhaltungen:
- WO-A1-2005/103486
- CH-A- 239 604
- DE-A1- 1 503 246
- JP-A- S60 204 975

## Beschreibung

Die Erfindung betrifft eine hydraulische Maschine vom Typ Pelton und ein Betriebsverfahren für eine solche hydraulische Maschine. Im Folgenden wird eine hydraulische Maschine vom Typ Pelton meist kurz als Pelton-Turbine bezeichnet.

Pelton-Turbinen werden in der Regel bei größeren Fallhöhen verwendet. Daher sind die zur Turbine führenden Druckrohrleitungen entsprechend lang und müssen für hohe Wasserdrücke ausgelegt werden. Die Regelung einer Pelton-Turbine erfolgt mittels einer oder mehrerer Düsen, welche stufenlos geöffnet und geschlossen werden können. Beim schnellen Schließen der Düsen kann es bekanntermaßen zu einem sogenannten Druckstoß kommen, welcher im Extremfall zu einem Bersten der Druckrohrleitung führen kann. Das Problem wird dadurch umgangen, dass man die Schließgeschwindigkeit der Düsen begrenzt. Im Prinzip könnte das bei modernen Turbinen durch eine elektronische Implementierung in der Steuereinheit des Reglers gewährleistet werden. Da der Ausfall der Elektronik ein Szenario darstellt, welches durchaus vorkommen kann, genügt dies zur Gewährleistung der geforderten Sicherheit nicht. Beispielsweise muss die Turbine auch bei einem Stromausfall sicher zum Stillstand gebracht werden können. Daher sind nach wie vor mechanische Begrenzungen der Schließgeschwindigkeit im Einsatz.

Die WO 2005/103486 A1 offenbart ein Verfahren zum Betrieb einer Pelton-Turbine umfassend ein Laufrad, wenigstens eine Düse, einen Wasserweg und eine Steuereinrichtung zum Steuern eines Öffnungsgrades der Düse, wobei das Laufrad eine Vielzahl von Bechern umfasst, und wobei die Pelton-Turbine mechanische Mittel zur Realisierung eines einstufigen Stellgesetzes umfasst, wodurch die Stellgeschwindigkeit der Düse auf eine maximal zulässige Stellgeschwindigkeit begrenzt wird.

Darüber hinaus hat man festgestellt, dass bei den meisten Pelton-Turbinen ein Schnellschluss von 100% Düsenöffnung auf 0% nicht einmal den schlimmsten zu erwartenden Fall bzgl. Druckstoß darstellt. Dies ist hingegen der sogenannte Reflexionsdruckstoß. Ein solcher Reflexionsdruckstoß kommt dann zustande, wenn nach einem schnellen Schließvorgang ein kurzzeitiger schneller Öffnungsvorgang erfolgt, auf welchen wiederum ein schneller Schließvorgang folgt. Ein schädlicher Reflexionsdruckstoß wird bei herkömmlichen Anlagen dadurch vermieden, dass die Schließgeschwindigkeitsbegrenzung mehrstufig ausgeführt wird. D.h. in Abhängigkeit vom Öffnungsgrad der Düsen werden unterschiedliche maximal zulässige Schließgeschwindigkeiten festgelegt. Dabei nehmen die maximal zulässigen Schließgeschwindigkeiten mit abnehmenden Öffnungsgrad der Düsen ab. D.h. bei kleinen Öffnungsgraden der Düsen muss langsamer geschlossen werden als bei größeren Öffnungsgraden der Düsen. Auch diese mehrstufigen Schließgesetze der Düsen müssen mechanisch realisiert werden, was einerseits zu sehr komplizierten, aufwändigen und fehleranfälligen mechanischen Konstruktionen führt, und andererseits ist dadurch die Stellgeschwindigkeit bei kleinen Leistungen (d.h. bei kleinen Düsenöffnungen) sehr eingeschränkt. Dies gilt sowohl für das Schließen als auch für das Öffnen, da die mechanische Begrenzung der Stellgeschwindigkeit der Düsen immer sowohl beim Öffnen als auch beim Schließen greift. Man nennt daher die erwähnte mehrstufige Schließgeschwindigkeitsbegrenzung besser eine mehrstufige Stellgeschwindigkeitsbegrenzung bzw. ein mehrstufiges Stellgesetzt.

Die Aufgabe der Erfindung ist es, eine hydraulische Maschine vom Typ Pelton und ein Betriebsverfahren für dieselbe anzugeben, welche ohne ein mehrstufiges mechanisch realisiertes Stellgesetz die notwendige Sicherheit gegenüber einem Reflexionsdruckstoß gewährt.

Die Aufgabe wird erfindungsgemäß durch Ausführungen entsprechend den unabhängigen Ansprüchen gelöst. Weitere vorteilhafte Ausführungsformen der vorliegenden Erfindung finden sich in den Unteransprüchen.

Im Folgenden wird die Erfindung anhand von Figuren erläutert. Die Figuren zeigen im Einzelnen:
- Fig.1: Erfindungsgemäße hydraulische Maschine
- Fig.2: Erfindungsgemäßes Betriebsverfahren
- Fig. 3: Diagramme zur Veranschaulichung des erfindungsgemäßen Betriebsverfahrens
- Fig. 4: Diagramm zur Veranschaulichung einer Ausführungsform von Schritt S6
- Fig. 5: Diagramm zur Veranschaulichung einer Ausführungsform von Schritt S6
- Fig. 6: Diagramm zur Veranschaulichung einer Ausführungsform von Schritt S6
- Fig. 7: Diagramm zur Veranschaulichung einer Ausführungsform von Schritt S6

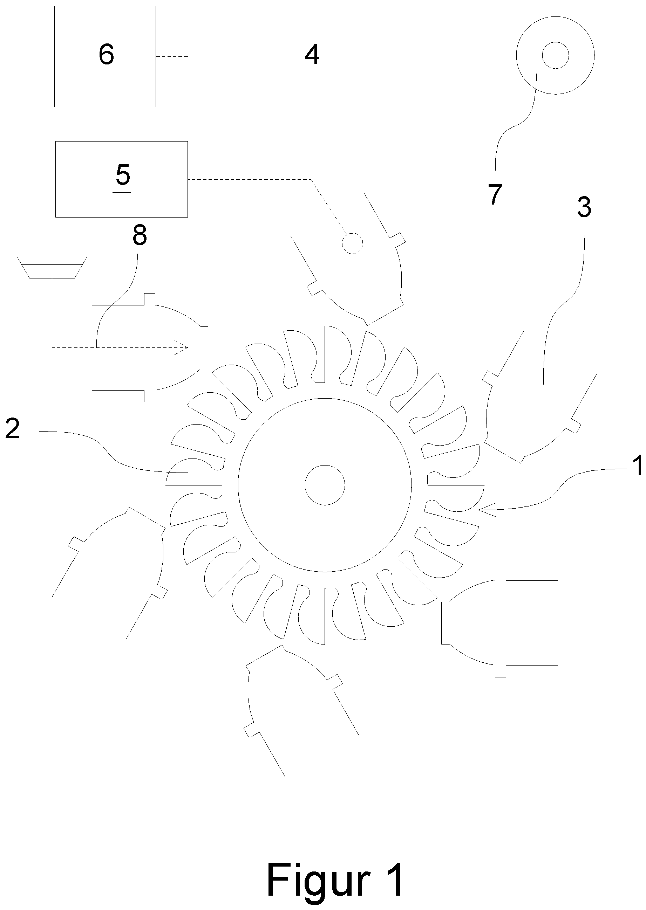

Figur 1 zeigt eine erfindungsgemäße hydraulische Maschine vom Typ Pelton (kurz Pelton-Turbine) in schematischer Darstellung. Die Pelton-Turbine umfasst ein Laufrad, welches mit 1 bezeichnet ist. Das Laufrad 1 umfasst eine Vielzahl von Bechern, von denen einer mit 2 bezeichnet ist. Die Pelton-Turbine umfasst wenigstens eine Düse, welche mit 3 bezeichnet ist. Die in Figur 1 dargestellte Pelton-Turbine umfasst 6 Düsen 3. Die Pelton-Turbine umfasst eine Steuereinrichtung zum Steuern des Öffnungsgrades der Düsen 3, welche mit 4 bezeichnet ist.

Damit die Steuereinrichtung 4 den Öffnungsgrad der Düsen 3 steuern kann, umfasst die Pelton-Turbine geeignete Mittel, die dies ermöglichen. Gewöhnlich wird der Öffnungsgrad der Düsen 3 mit Hilfe von Hydraulikzylindern eingestellt. Dann umfasst die Pelton-Turbine ein geeignetes Hydraulikaggregat und die Steuereinrichtung 4 betätigt ein Ventil oder mehre Ventile, welche die Zufuhr bzw. Abfuhr von Hydraulikflüssigkeit in die Kammern eines oder mehrerer Hydraulikzylinder bewirken. Es ist jedoch auch denkbar, dass die Düsen 3 mit Hilfe von Elektroantrieben betätigt werden. In diesem Fall steuert die Steuereinrichtung 4 die Bewegung der Elektroantriebe.

Die erfindungsgemäße Pelton-Turbine umfasst ferner Mittel, mit denen ein einstufiges Stellgesetz mechanisch realisiert werden kann. In Figur 1 sind diese Mittel durch das mit 5 bezeichnete Rechteck angedeutet. Ein mechanisch realisiertes einstufiges Stellgesetz bedeutet, dass die Stellgeschwindigkeit der Düsen 3 mechanisch unabhängig von jeweiligen Öffnungsgrad der Düsen 3 auf eine maximal zulässige Stellgeschwindigkeit begrenzt ist. D.h. die maximal zulässige Stellgeschwindigkeit der Düsen 3 ist über dem gesamten einstellbaren Öffnungsbereich der Düsen 3 konstant. Bei hydraulisch betätigten Düsen besteht die herkömmliche mechanische Realisierung eines solchen einstufigen Stellgesetzes in jeweils einer Drossel, welche sich im zugehörigen Hydraulikkreislauf befindet, und welche so die Durchflussrate von Hydraulikflüssigkeit begrenzt. Bei elektrisch betätigten Düsen kann eine mechanische Bremse zu einer solchen Begrenzung der Stellgeschwindigkeit verwendet werden.

Dabei wird die maximal zulässige Stellgeschwindigkeit so festgelegt, dass bei einem Schließvorgang von 100% auf 0% mit dieser Stellgeschwindigkeit gerade noch kein schädlicher Druckstoß zustande kommt. Dabei erfolgt die notwendige Berechnung in bekannter Weise unter Einbeziehung von geeigneten Sicherheitsmargen.

Die Erfinder haben sich von dem Gedanken leiten lassen, dass man die zu einem Reflexionsdruckstoß führende Kombination von aufeinanderfolgenden Schließ- und Öffnungsvorgängen, dadurch vermeiden kann, dass die Öffnungsgeschwindigkeit der Düsen zusätzlich zur mechanischen Begrenzung durch das einstufige Stellgesetz durch die Steuereinrichtung 4 begrenzt wird, falls in einem (zeitlich) vorgelagerten Zeitintervall von vordefinierter Länge ein Schließvorgang stattgefunden hat. In diesem Fall veranlasst die Steuereinrichtung, dass die Öffnungsgeschwindigkeit kleiner ist als die gemäß dem mechanischen Stellgesetz vorgegebene maximale Öffnungsgeschwindigkeit.

Die vordefinierte Länge des vorgelagerten Zeitintervalls ist durch wenigstens die doppelte Wellenlaufzeit im Wasserweg der Pelton-Turbine gegeben. Die Erfinder haben erkannt, dass es nur dann zu einem Reflexionsdruckstoß kommen kann, wenn Schließen und anschließendes Öffnen innerhalb des dadurch gegebenen Zeitraumes erfolgen. Für viele Pelton-Turbinen beträgt die doppelte Wellenlaufzeit im Wasserweg 5-10 Sekunden. D.h. die Länge des vorgelagerten Zeitintervalls muss wenigstens die doppelte Wellenlaufzeit betragen, damit ein Reflexionsdruckstoß vermieden werden kann. Bei einer Pelton-Turbine erstreckt sich der Wasserweg zwischen einem Oberwasserbecken und den Düsen. In Figur 1 ist der Wasserweg durch den gestrichelten Pfeil angedeutet, welcher mit 8 bezeichnet ist und welcher sich zwischen einem stilisierten Oberwasserbecken und einer Düse erstreckt. Bei Pelton-Turbinen mit mehr als einer Düse gehört zum Wasserweg auch noch ein Verteiler, welcher zwischen den Düsen und der Druckrohrleitung angeordnet ist. Dabei wird jedoch der weitaus größte Teil des Wasserweges durch die Druckrohrleitung gebildet. In Figur 1 ist der Verteiler aus Gründen der Übersichtlichkeit nicht dargestellt.

Neben dem im vorangehenden Abschnitt beschriebenen Reflexionsdruckstoß gibt es auch Reflexionsdruckstöße, welche dadurch verursacht werden, dass die verursachende Störung nicht nur einmal den Wasserweg hinauf und hinab läuft, sondern mehrfach. Man kann solche Reflexionsdruckstöße als Reflexionsdruckstöße höherer Ordnung bezeichnen. Diese fallen jedoch in der Regel weniger stark aus, als der Reflexionsdruckstoß erster Ordnung. Je nach Ausbildung der betreffenden hydraulischen Maschine müssen auch Reflexionsdruckstöße höherer Ordnung vermieden werden. Das kann erfindungsgemäß dadurch erfolgen, dass die Länge des vorgelagerten Zeitintervalls wenigstens die vierfache, wenigstens die sechsfache ... Wellenlaufzeit im Wasserweg beträgt.

Erfindungsgemäß ist die Steuereinrichtung 4 so ausgebildet, dass sie die Geschwindigkeit eines Öffnungsvorganges begrenzen kann, wenn im vorgelagerten Zeitintervall ein Schließvorgang stattgefunden hat. Dazu muss die Steuereinrichtung 4 die durchgeführten Öffnungs- und Schließvorgänge wenigstens über einen Zeitraum speichern können, welcher der Länge des vorgelagerten Zeitintervalls entspricht. Außerdem muss in der Steuereinrichtung 4 ein Algorithmus installiert sein, welcher überprüft, ob innerhalb des vorgelagerten Zeitintervalls ein Schließvorgang stattgefunden hat, und welcher dann ggf. die Geschwindigkeit eines anstehenden Öffnungsvorgangs wie beschrieben zusätzlich zur mechanischen Begrenzung weiter begrenzt.

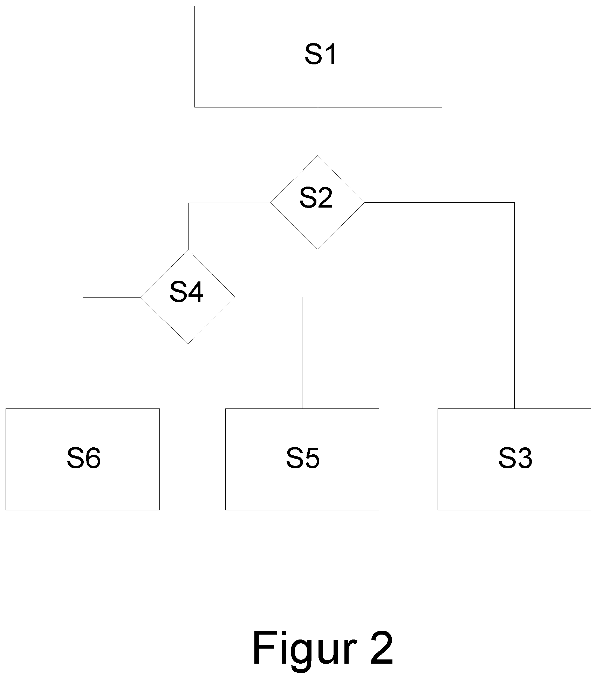

Figur 2 zeigt das Ablaufdiagramm eines erfindungsgemäßen Betriebsverfahrens. Das Rechteck, welches mit S1 bezeichnet ist, steht dabei für einen Vorgang, bei dem die Steuereinrichtung 4 eine anstehende Änderung des Öffnungsgrades der Düsen 3 bestimmt. Der Grund für eine solche Änderung des Öffnungsgrades kann vielfältig sein.

So kann beispielsweise eine geänderte Anforderung des Netzes vorliegen. D.h. es kann mehr oder weniger Energieabgabe von der Pelton-Turbine gefordert sein. Ferner können auch Fehlfunktionen eine Änderung des Öffnungsgrades der Düsen 3 erfordern. Z.B. müssen bei einen Lastabwurf die Düsen 3 so schnell wie möglich geschlossen werden ("Schnellschluss"). Die Raute, welche mit S2 bezeichnet ist, steht für eine Fallunterscheidung. Das Kriterium der Fallunterscheidung in S2 besteht darin, ob es sich bei der in S1 bestimmten Änderung des Öffnungsgrades der Düsen 3 um ein Öffnen oder um ein Schließen derselben handelt. Wenn es sich um ein Schließen handelt, dann wird der durch das Rechteck S3 symbolisierte Vorgang ausgeführt. Dabei erfolgt das Schließen in S3 mit einer Geschwindigkeit, die lediglich durch das mechanische Stellgesetz begrenzt ist. Wenn es sich bei der Unterscheidung in S2 um ein Öffnen handelt, dann wird die durch die Raute S4 symbolisierte Fallunterscheidung durchgeführt. Das Kriterium der Fallunterscheidung in S4 besteht darin, ob in dem vorgelagerten Zeitintervall von vordefinierter Länge ein Schließvorgang stattgefunden. Wenn im vorgelagerten Zeitintervall kein Schließvorgang stattgefunden hat, wird der durch das Rechteck S5 symbolisierte Vorgang ausgeführt. Der Vorgang S5 ist ein Öffnen mit einer Geschwindigkeit, die lediglich durch das mechanische Stellgesetz begrenzt ist. Wenn im vorgelagerten Zeitintervall ein Schließvorgang stattgefunden hat, wird der durch das Rechteck S6 symbolisierte Vorgang ausgeführt. Der Vorgang S6 ist ein Öffnen mit einer Geschwindigkeit, die kleiner ist als die durch das mechanische Stellgesetz vorgegebene maximale Stellgeschwindigkeit. D.h. dass die Öffnungsgeschwindigkeit der Düsen in S6 zusätzlich zur mechanischen Begrenzung über das einstufige Stellgesetz durch die Steuereinrichtung 4 begrenzt wird.

Es ist klar, dass die Schritte S1, S2, S3 und S5 den entsprechenden Schritten bei dem herkömmlichen Betriebsverfahren einer Pelton-Turbine mit einstufigem Stellgesetzt entsprechen. Das erfindungsgemäße Verfahren unterscheidet sich von diesem herkömmlichen Betriebsverfahren durch die zusätzliche Fallunterscheidung S4 und durch den Vorgang S6. Durch die Schritte S4 und S6 wird erreicht, dass auch bei einer Pelton-Turbine mit nur einstufigem mechanisch realisiertem Stellgesetzt ein Reflexionsrückstoß zuverlässig vermieden werden kann.

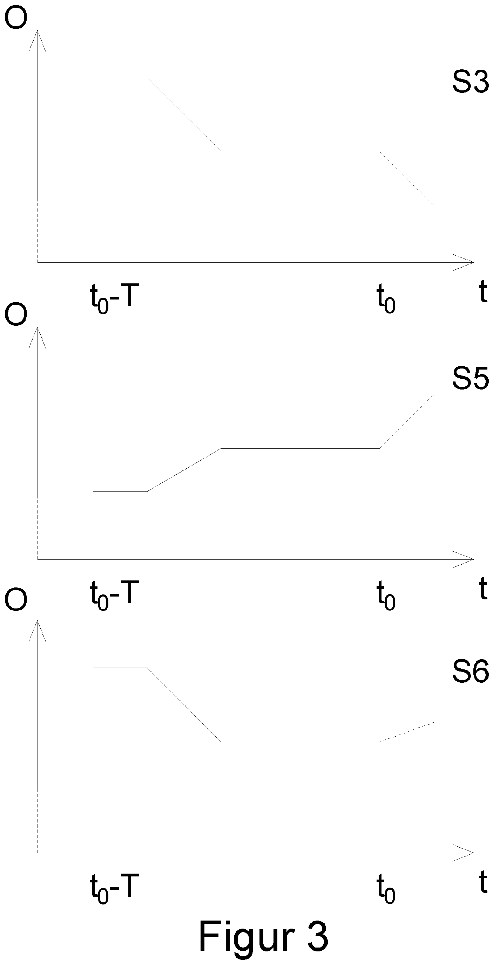

Figur 3 enthält drei Diagramme, die die unterschiedlichen Fälle verdeutlichen, welche zu den Vorgängen S3, S5 und S6 führen. Bei den Diagrammen handelt es sich um Darstellungen, bei denen die Zeitachse horizontal verläuft und mit t bezeichnet ist, und bei denen in vertikaler Richtung der Öffnungsgrad der Düsen 3 aufgetragen ist. Diese Achse ist mit O bezeichnet. In allen Diagrammen ist der aktuelle Zeitpunkt mit t₀ gekennzeichnet. D.h. alle Zeitpunkte links von t₀ gehören der Vergangenheit an. Die vordefinierte Länge des vorgelagerten Zeitintervalls ist T. D.h. das vorgelagerte Zeitintervall erstreckt sich zwischen den Zeitpunkten t₀-T und t₀.

Das obere Diagramm von Figur 3 stellt eine mögliche Situation dar, die zum Schritt S3 führt. In Schritt S1 wurde als anstehende Änderung des Öffnungsgrades ein Schließvorgang bestimmt. Dieser ist durch die gestrichelte abfallende Linie angedeutet, welche sich rechts vom Zeitpunkt erstreckt. Da es für den Fall S3 keine zusätzliche Beschränkung der Stellgeschwindigkeit über die mechanisch begrenzte maximal zulässige Stellgeschwindigkeit hinaus gibt, kann der Schließvorgang mit dieser Geschwindigkeit erfolgen. Dabei spielt die Vorgeschichte im vorgelagerten Zeitintervall keine Rolle. Im dargestellten Fall fand im diesem Zeitintervall ein Schließvorgang mit der mechanisch begrenzten maximal zulässigen Stellgeschwindigkeit statt.

Das mittlere Diagramm von Figur 3 stellt eine mögliche Situation dar, die zum Schritt S5 führt. In Schritt S1 wurde als anstehende Änderung des Öffnungsgrades ein Öffnungsvorgang bestimmt. Dieser ist durch die gestrichelte ansteigende Linie angedeutet, welche sich rechts vom Zeitpunkt t₀ erstreckt. Wenn in Schritt S1 ein Öffnungsvorgang bestimmt wurde, dann muss im Schritt S4 geprüft werden, ob im vorgelagerten Zeitintervall ein Schließvorgang stattgefunden hat. Das ist offenbar nicht der Fall (es gab nur einen Öffnungsvorgang). Daher kann der in Schritt S1 bestimmte nach t₀ anstehende Öffnungsvorgang mit der mechanisch begrenzten maximal zulässigen Stellgeschwindigkeit erfolgen.

Das untere Diagramm von Figur 3 stellt eine mögliche Situation dar, die zum Schritt S6 führt. In Schritt S1 wurde als anstehende Änderung des Öffnungsgrades ein Öffnungsvorgang bestimmt. Dieser ist durch die gestrichelte ansteigende Linie angedeutet, welche sich rechts vom Zeitpunkt t₀ erstreckt. Wenn in Schritt S1 ein Öffnungsvorgang bestimmt wurde, dann muss im Schritt S4 geprüft werden, ob im vorgelagerten Zeitintervall ein Schließvorgang stattgefunden hat. Das ist offenbar der Fall (es gab einen Schließvorgang). Daher darf der in Schritt S1 bestimmte nach t₀ anstehende Öffnungsvorgang nicht mit der mechanisch begrenzten maximal zulässigen Stellgeschwindigkeit erfolgen, sondern die Öffnung muss mit einer kleineren Geschwindigkeit erfolgen, was durch die geringere Steigung der ansteigenden Linie rechts von t₀ im Vergleich zu der entsprechenden Linie im mittleren Diagramm angedeutet ist. Es sei an dieser Stelle erwähnt, dass es genügt um zum Schritt S6 zu gelangen, wenn bei der Prüfung in Schritt S4 der zeitliche Endpunkt eines Schließvorgangs in das vorgelagerte Zeitintervall fällt. Es muss nicht der gesamte Schließvorgang in das vorgelagerte Zeitintervall fallen.

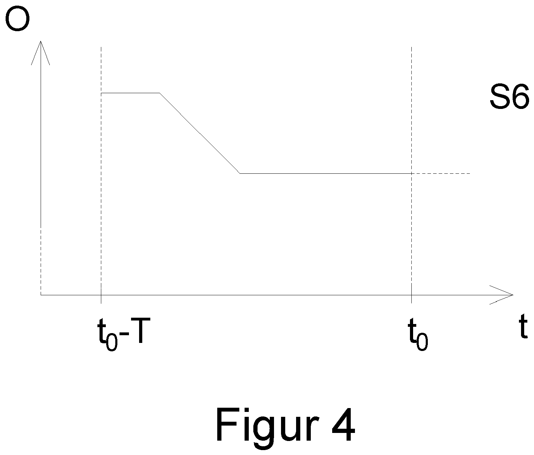

Für die zusätzliche Beschränkung der Öffnungsgeschwindigkeit in Schritt S6 gibt es verschiedene Möglichkeiten. Figur 4 veranschaulicht eine Ausführungsform von Schritt S6, bei der das Öffnen komplett unterdrückt wird, solange im vorgelagerten Zeitintervall ein Schließvorgang stattgefunden hat. Das entspricht sozusagen einem Öffnen mit verschwindender Geschwindigkeit. Daher verläuft die gestrichelte Linie rechts von t₀ waagerecht.

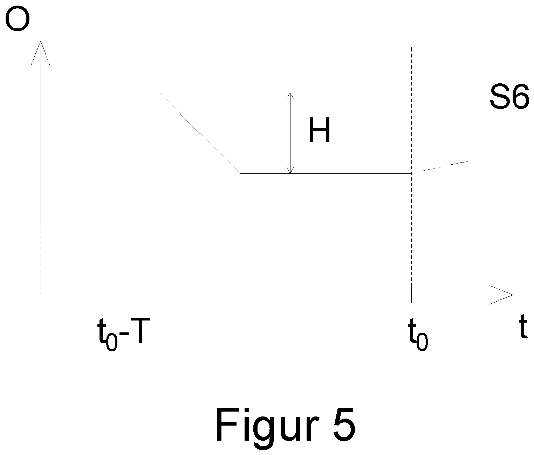

Figur 5 veranschaulicht eine Ausführungsform von Schritt S6, bei der das Öffnen nicht komplett unterdrückt wird, solange im vorgelagerten Zeitintervall ein Schließvorgang stattgefunden hat. Vielmehr wird der Hub des Schließvorgangs, welcher im vorgelagerten Zeitintervall stattgefunden hat, dazu verwendet, um die zusätzliche Begrenzung der Öffnungsgeschwindigkeit festzulegen. In Figur 5 ist dieser Hub mit H bezeichnet. Sollten im vorgelagerten Zeitintervall mehrere separate Schließvorgänge stattgefunden haben, so verwendet man den Gesamthub dieser Schließvorgänge. Fällt ein Schließvorgang nur teilweise in das vorgelagerte Zeitintervall, so kann wahlweise der Hub des gesamten Schließvorgangs oder nur der Hub des Teils des Schließvorganges verwendet werden, welcher in das vorgelagerte Zeitintervall fäll. Je größer H ist, desto stärker wird die Öffnungsgeschwindigkeit begrenzt, d.h. der anstehende Öffnungsvorgang wird mit einer umso kleineren Geschwindigkeit ausgeführt.

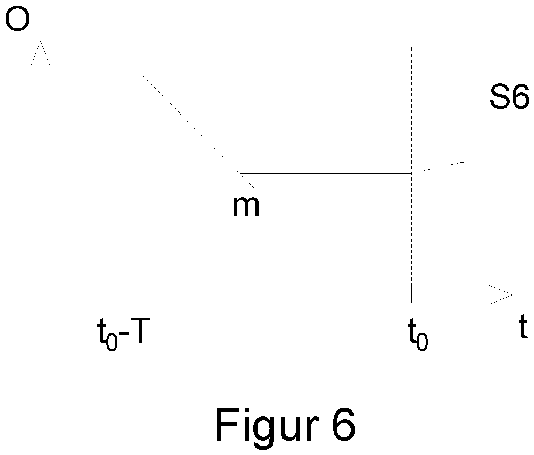

Figur 6 veranschaulicht eine Ausführungsform von Schritt S6, bei der das Öffnen nicht komplett unterdrückt wird, solange im vorgelagerten Zeitintervall ein Schließvorgang stattgefunden hat. Vielmehr wird die Geschwindigkeit des Schließvorgangs, welcher im vorgelagerten Zeitintervall stattgefunden hat, dazu verwendet, um die zusätzliche Begrenzung der Öffnungsgeschwindigkeit festzulegen. In Figur 6 ist diese Geschwindigkeit durch die gestrichelte Linie mit der Steigung m angedeutet. Dabei ist m der Betrag der Steigung, da in diesem Dokument generell Geschwindigkeiten von Öffnungsgraden der Düsen als positive Größen angesehen werden. Das Vorzeichen steckt jeweils in den beigefügten Begriffen "Schließen" oder "Öffnen". Sollten im vorgelagerten Zeitintervall mehrere separate Schließvorgänge stattgefunden haben, so verwendet man wahlweise als m den Maximalwert oder den Mittelwert der zugehörigen Geschwindigkeiten oder die Geschwindigkeit des zuletzt stattgefundenen Schließvorgangs. Bei der Mittelwertbildung können noch Gewichte verwendet werden, z.B. die zeitliche Länge der jeweiligen Schließvorgänge. Je größer m ist, desto stärker wird die Öffnungsgeschwindigkeit begrenzt, d.h. der anstehende Öffnungsvorgang wird mit einer umso kleineren Geschwindigkeit ausgeführt.

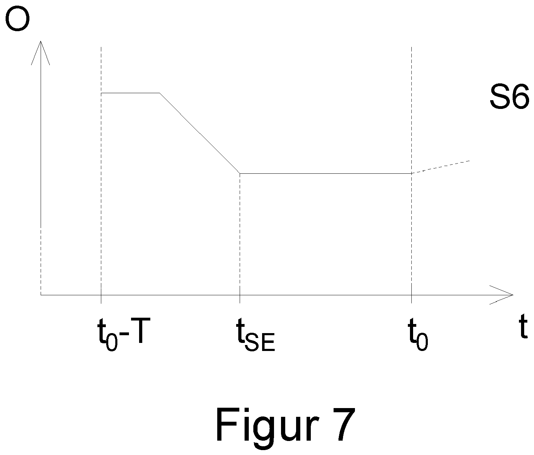

Figur 7 veranschaulicht eine Ausführungsform von Schritt S6, bei der das Öffnen nicht komplett unterdrückt wird, solange im vorgelagerten Zeitintervall ein Schließvorgang stattgefunden hat. Vielmehr wird der Parameter t_{SE} dazu verwendet, um die zusätzliche Begrenzung der Öffnungsgeschwindigkeit festzulegen. Der Parameter t_{SE} ergibt sich daraus, dass der Zeitpunkt bestimmt wird, welcher am Ende des letzten zurückliegenden Schließvorganges liegt. Je näher t_{SE} an t₀ liegt, desto stärker wird die Öffnungsgeschwindigkeit begrenzt, d.h. der anstehende Öffnungsvorgang wird mit einer umso kleineren Geschwindigkeit ausgeführt.

Offenbar kann t_{SE} auch zu Formulierung der in S4 geprüften Bedingung verwendet werden: Wenn t_{SE} im vorgelagerten Intervall liegt (t_{SE} *∈* [t₀-T, t₀]), dann wird S6 ausgeführt, sonst S5.

Die Verwendung des Parameters t_{SE} ist besonders vorteilhaft, wenn Reflexionsdruckstöße höherer Ordnung unterdrückt werden sollen, da dieser Parameter eine Unterscheidung zwischen den Druckstößen von unterschiedlicher Ordnung ermöglicht. Wenn t_{SE} beispielsweise mehr als die doppelte Wellenlaufzeit im Wasserweg zurückliegt, dann handelt es sich um einen Reflexionsdruckstoß von wenigstens zweiter Ordnung, welcher zu unterdrücken ist. Entsprechend kann, wie bereits im vorangehenden Abschnitt beschrieben, die Öffnungsbegrenzung ausfallen. Die im Zusammenhang mit den Figuren 5-7 definierten Parameter H, m und t_{SE} können auch in beliebiger Kombination verwendet werden, um die Begrenzung der Öffnungsgeschwindigkeit im Schritt S6 festzulegen.

Weitere Möglichkeiten zur Gestaltung des erfindungsgemäßen Verfahrens ergeben sich daraus, dass es mehrere Möglichkeiten für die Zeitdauer gibt, in der die in S6 festgelegte zusätzliche Begrenzung der Öffnungsgeschwindigkeit wirksam bleibt. Eine Möglichkeit besteht darin, dass für diese Zeitdauer wenigstens t_{SE}-t₀+T gewählt wird. Nach Ablauf dieser Zeit liegt t_{SE} nicht mehr im vorgelagerten Zeitintervall. Insbesondere mit der Ausführungsform gemäß Figur 4 ist man damit immer auf der sicheren Seite, da ja ein Öffnen komplett unterdrückt wird, solange die in S6 festgelegte Begrenzung wirksam bleibt. Nach Ablauf der Zeitdauer t_{SE}-t₀+T kann dann der in Figur 2 dargelegte Ablauf von vorn ausgeführt werden. Eine andere Möglichkeit besteht darin, dass die in S6 festgelegte zusätzliche Begrenzung der Öffnungsgeschwindigkeit für eine vorbestimmte Zeitdauer Δt wirksam bleibt. Für Δt kann dabei vorteilhaft der kürzeste Zeitraum gewählt, nach dem bei der betreffenden Pelton-Turbine mit einer Änderung zu rechnen ist, welche die Steuereinheit zum Einleiten eines Änderungsvorgangs bzgl. der Düsenöffnung veranlassen könnte. Δt kann beispielsweise 1 Sekunde betragen.

Nach Ablauf von Δt wird dann wiederum der Ablauf gemäß Figur 2 erneut durchlaufen.

Insbesondere in Verbindung mit den Ausführungsformen gemäß den Figuren 5-7 ergibt sich so ein dynamisches Verhalten bzgl. der zusätzlichen Begrenzung der Öffnungsgeschwindigkeit, so dass die Reaktion der Turbine bzgl. Öffnungsanforderungen auf diese Weise möglichst wenig beeinträchtigt wird.

Der Parameter T wird mittels bekannten Berechnungsverfahren für die jeweilige Pelton-Turbine festgelegt. Der Zusammenhang zwischen den Parametern H, m, t_{SE} und der in Schritt S6 festgelegten zusätzlichen Begrenzung der Öffnungsgeschwindigkeit ergibt sich aus bekannten Simulationsrechnungen. Dabei werden alle möglichen Szenarien durchgespielt und der Zusammenhang so festgelegt, dass in keinem möglichen Szenario ein Reflexionsdruckstoß erfolgen kann. Dabei können Sicherheitsmargen vorteilhaft berücksichtigt werden. Mit anderen Worten muss die Simulation sicherstellen, dass in jedem denkbaren Zustand, welchen die Pelton-Turbine bei der Ausführung des erfindungsgemäßen Verfahrens einnehmen kann, ein Schnellschluss der Pelton-Turbine zu keinem Reflexionsdruckstoß führen kann. Für die Ausführungsform gemäß Figur 4 müssen solche zusätzlichen Simulationsrechnungen offenbar nicht durchgeführt werden (es genügt die Berechnung, welche für die Auslegung des einstufigen Stellgesetztes durchgeführt werden muss). Diese Ausführungsform kann daher ohne zusätzlichen Simulationsaufwand realisiert werden.

Wenn die Steuereinrichtung das bis hierher beschriebene erfindungsgemäße Verfahren zuverlässig ausführt, dann ergibt sich daraus schon eine Sicherheit gegenüber Stromausfällen, wenn sichergestellt ist, dass bei einem Stromausfall automatisch ein Schnellschluss der Turbine ausgeführt wird. Bei den herkömmlichen Pelton-Tubinen ist dies standardmäßig der Fall. D.h. das erfindungsgemäße Verfahren benötigt bzgl. Stromausfall keine weiteren Sicherheitsmaßnahmen über das herkömmliche normale Maß hinaus.

Um die üblichen Sicherheitsstandards zu erfüllen, bleibt damit nur noch sicher zu stellen, dass eine Fehlfunktion der Steuereinrichtung bei der Ausführung des erfindungsgemäßen Verfahrens entweder vermieden oder zuverlässig abgefangen wird. Dazu kann z.B. die Steuereinrichtung sicher ausgeführt werden, d.h. die Steuereinrichtung wird bzgl. der Durchführung des erfindungsgemäßen Verfahrens so gestaltet, dass gemäß den üblichen Sicherheitsstandards eine Fehlfunktion ausgeschlossen werden kann. Eine andere Möglichkeit besteht in der Bereitstellung einer Kontrolleinrichtung, welche die Durchführung des erfindungsgemäßen Verfahrens durch die Steuereinrichtung überwacht. Dabei müssen wenigstens die Schritte S4 und S6 überwacht werden. Dabei leitet die Kontrolleinrichtung bei der Detektion einer Fehlfunktion sofort (d.h. noch vor dem Wirksamwerden der fehlerhaften Steuerbefehle) einen Schnellschluss der Turbine ein. Dies ist gefahrlos möglich, da bis dato die Steuereinrichtung gemäß dem erfindungsgemäßen Verfahren korrekt funktioniert hat, und die Simulationsrechnungen sicherstellen, dass in diesem Fall ein Schnellschluss jederzeit möglich ist. Es klar, dass die Sicherheit noch weiter vergrößert werden kann, indem die Kontrolleinrichtung mehrfach ausgeführt (Redundanz). Figur 1 zeigt eine Kontrolleinrichtung, welche mit 6 bezeichnet ist.

Ferner richtet sich die vorliegende Anmeldung auf ein Computerprogramm, welches so ausgebildet ist, dass die Steuereinrichtung das erfindungsgemäße Verfahren mittels desselben ausführen kann, d.h. dass das Computerprogramm Befehle umfasst, die bewirken, dass die Steuereinrichtung das erfindungsgemäße Verfahren ausführt. Ferner richtet sich die vorliegende Anmeldung auf ein computerlesbares Medium, auf dem das Computerprogramm gespeichert ist. Figur 1 zeigt ein solches computerlesbares Medium, welches mit 7 bezeichnet ist.

### Bezugszeichenliste

- 1: Laufrad
- 2: Becher
- 3: Düse
- 4: Steuereinrichtung
- 5: Mittel zur mechanischen Realisierung eines einstufigen Stellgesetzes
- 6: Kontrolleinrichtung
- 7: Computerlesbares Medium
- 8: Wasserweg

## Patentansprüche

1. Verfahren zum Betrieb einer Pelton-Turbine umfassend ein Laufrad (1), wenigstens eine Düse (3), einen Wasserweg (8) und eine Steuereinrichtung (4) zum Steuern eines Öffnungsgrades der Düse (3), wobei das Laufrad (1) eine Vielzahl von Bechern (2) umfasst, und wobei die Pelton-Turbine mechanische Mittel zur Realisierung eines einstufigen Stellgesetztes umfasst, wodurch die Stellgeschwindigkeit der Düse (3) auf eine maximal zulässige Stellgeschwindigkeit begrenzt wird, **dadurch gekennzeichnet, dass** das Verfahren die folgenden Schritte umfasst:
S1: Bestimmung einer anstehenden Änderung des Öffnungsgrades der Düse (3) durch die Steuereinrichtung (4);
S4: Falls die in Schritt S1 bestimmte Änderung ein Öffnen ist, prüfen, ob in einem dem aktuellen Zeitpunkt t₀ vorgelagerten Zeitintervall von vordefinierte Länge T ein Schließvorgang stattgefunden hat;
S6: Falls die Prüfung in Schritt S4 ergeben hat, dass im vorgelagerten Zeitintervall ein Schließvorgang stattgefunden hat, wird das in Schritt S1 bestimmte Öffnen mit einer Geschwindigkeit durchgeführt, welche auf einen Wert begrenzt ist, welcher kleiner ist als die mechanisch realisierte maximal zulässige Stellgeschwindigkeit, um einen Reflexionsdruckstoß zu vermeiden;
und wobei die Länge T wenigstens die doppelte Wellenlaufzeit im Wasserweg (8) beträgt.

2. Verfahren nach Anspruch 2, wobei T wenigstens die vierfache Wellenlaufzeit im Wasserweg (8) beträgt.

3. Verfahren nach Anspruch 1 oder 2, wobei im Schritt S6 das in Schritt S1 bestimmte Öffnen komplett unterdrückt wird.

4. Verfahren nach Anspruch 1 oder 2, wobei im Schritt S6 zur Festlegung der Geschwindigkeit, mit der das in Schritt S1 bestimmte Öffnen durchgeführt wird, ein Parameter H verwendet wird, wobei der Parameter H der Hub des Schließvorgangs ist, welcher im vorgelagerten Zeitintervall stattgefunden hat.

5. Verfahren nach einem der Ansprüche 1, 2 oder 4, wobei im Schritt S6 zur Festlegung der Geschwindigkeit, mit der das in Schritt S1 bestimmte Öffnen durchgeführt wird, ein Parameter m verwendet wird, wobei der Parameter m die Geschwindigkeit des Schließvorgangs ist, welcher im vorgelagerten Zeitintervall stattgefunden hat.

6. Verfahren nach einem der Ansprüche 1, 2, 4 oder 5, wobei im Schritt S6 zur Festlegung der Geschwindigkeit, mit der das in Schritt S1 bestimmte Öffnen durchgeführt wird, ein Parameter t_{SE} verwendet wird, wobei der Parameter t_{SE} der Zeitpunkt ist, welcher am Ende des Schließvorgangs liegt, welcher im vorgelagerten Zeitintervall stattgefunden hat.

7. Verfahren nach einem der vorherigen Ansprüche, wobei im Schritt S6 der Zeitpunkt t_{SE} bestimmt wird, welcher am Ende des Schließvorgangs liegt, welcher im vorgelagerten Zeitintervall stattgefunden hat, und wobei die Öffnungsgeschwindigkeitsbegrenzung im Schritt S6 wenigstens für eine Zeitdauer beibehalten bleibt, welcher durch t_{SE}-t₀+T gegeben ist.

8. Verfahren nach einem der Ansprüche 1 bis 6, wobei die Öffnungsgeschwindigkeit im Schritt S6 für eine vorbestimmte Zeitdauer Δt beibehalten bleibt, und wobei nach Ablauf der Zeitdauer Δt die Schritte des Verfahrens erneut durchlaufen werden.

9. Verfahren nach einem der vorherigen Ansprüche, wobei bei einem Stromausfall automatisch ein Schnellschluss der Pelton-Turbine ausgeführt wird.

10. Pelton-Turbine umfassend ein Laufrad (1), wenigstens eine Düse (3), einen Wasserweg (8) und eine Steuereinrichtung (4) zum Steuern eines Öffnungsgrades der Düse (3), wobei das Laufrad (1) eine Vielzahl von Bechern (2) umfasst, und wobei die Pelton-Turbine mechanische Mittel zur Realisierung eines einstufigen Stellgesetztes umfasst, wodurch die Stellgeschwindigkeit der Düse (3) auf eine maximal zulässige Stellgeschwindigkeit begrenzt werden kann, und wobei die Pelton-Turbine Mittel umfasst, die dazu ausgelegt sind, die Schritte des Verfahrens nach einem der Ansprüche 1 bis 9 auszuführen.

11. Pelton-Turbine nach Anspruch 10, wobei die Pelton-Turbine eine Kontrolleinrichtung (6) zur Überwachung der Steuereinrichtung (4) umfasst.

12. Computerprogramm, umfassend Befehle, die bewirken, dass die Vorrichtung des Anspruches 10 oder 11 die Verfahrensschritte nach einem der Ansprüche 1 bis 9 ausführt.

13. Computerlesbares Medium, auf dem das Computerprogramm nach Anspruch 12 gespeichert ist.

## Claims

1. A method of operating a Pelton turbine comprising a runner (1), at least one nozzle (3), a water way (8) and a control device (4) for controlling a degree of opening of the nozzle (3), wherein the runner (1) comprises a plurality of buckets (2), and wherein the Pelton turbine comprises mechanical means for realising a single-stage actuating set, whereby the actuating speed of the nozzle (3) is limited to a maximum permissible actuating speed, **characterised in that** the method comprises the following steps:
S1: Determining a pending change in the degree of opening of the nozzle (3) by the control device (4);
S4: If the change determined in step S1 is an opening, checking whether a closing operation has taken place in a time interval of predefined length T preceding the current time t₀ ;
S6: If the check in step S4 has shown that a closing operation has taken place in the upstream time interval, the opening determined in step S1 is carried out at a velocity which is limited to a value which is smaller than the mechanically realised maximum permissible actuating velocity in order to avoid a reflection pressure shock;
and wherein the length T is at least twice the wave travel time in the water way (8).

2. The method according to claim 2, wherein T is at least four times the wave travel time in the water way (8).

3. The method according to claim 1 or 2, wherein in step S6 the opening determined in step S1 is completely suppressed.

4. The method according to claim 1 or 2, wherein in step S6 a parameter H is used for the determination of the velocity at which the opening determined in step S1 is performed, wherein the parameter H is the stroke of the closing operation which took place in the preceding time interval.

5. The method according to any one of claims 1, 2 or 4, wherein in step S6 a parameter m is used for the determination of the velocity at which the opening determined in step S1 is performed, wherein the parameter m is the velocity of the closing operation which took place in the preceding time interval.

6. The method according to any one of claims 1, 2, 4 or 5, wherein in step S6 a parameter t_{SE} is used to determine the velocity at which the opening determined in step S1 is performed, wherein the parameter t_{SE} is the time which is at the end of the closing operation which took place in the preceding time interval.

7. Method according to one of the previous claims, wherein in step S6 the time t_{SE} is determined which is at the end of the closing operation which took place in the preceding time interval, and wherein the opening speed limitation is maintained in step S6 for at least a time duration which is given by t -t_{SE0} +T.

8. The method according to any one of claims 1 to 6, wherein the opening velocity in step S6 is maintained for a predetermined time duration Δt, and wherein after the time duration Δt has elapsed, the steps of the method are run through again.

9. The method according to any one of the previous claims, wherein in the event of a power failure, a fast shutdown of the Pelton turbine is automatically performed.

10. A Pelton turbine comprising a runner (1), at least one nozzle (3), a water way (8) and a control device (4) for controlling an opening degree of the nozzle (3), wherein the runner (1) comprises a plurality of buckets (2), and wherein the Pelton turbine comprises mechanical means for realising a single-stage actuating set, whereby the actuating speed of the nozzle (3) can be limited to a maximum permissible actuating speed, and wherein the Pelton turbine comprises means adapted to carry out the steps of the method according to any one of claims 1 to 9.

11. Pelton turbine according to claim 10, wherein the Pelton turbine comprises a control device (6) for monitoring the control device (4).

12. A computer program comprising instructions that cause the apparatus of claim 10 or 11 to perform the method steps of any one of claims 1 to 9.

13. A computer-readable medium on which the computer program according to claim 12 is stored.

## Revendications

1. Procédé de fonctionnement d'une turbine Pelton comprenant un rotor (1), au moins une buse (3), une voie d'eau (8) et un dispositif de commande (4) pour commander un degré d'ouverture de la buse (3), dans lequel le rotor (1) comprend une pluralité de godets (2), et dans lequel la turbine Pelton comprend des moyens mécaniques pour réaliser une loi de commande à un seul étage, limitant ainsi la vitesse de commande de la buse (3) à une vitesse de commande maximale autorisée, **caractérisé en ce que** le procédé comprend les étapes suivantes :
S1 : détermination par le dispositif de commande (4) d'un changement à venir du degré d'ouverture de la buse (3) ;
S4 : si le changement déterminé à l'étape S1 est une ouverture, vérification si une activité du fermer a eu lieu dans un intervalle de temps de longueur T prédéfinie précédant l'instant présent t₀ ;
S6 : Si le contrôle effectué à l'étape S4 a montré qu'une activité de fermeture a eu lieu dans l'intervalle de temps précédent, l'ouverture déterminée à l'étape S1 est effectuée à une vitesse limitée à une valeur inférieure à la vitesse de manoeuvre maximale autorisée réalisée mécaniquement, afin d'éviter un choc de pression par réflexion ;
et la longueur T étant au moins égale au double de la durée de vie de la vague dans la voie d'eau (8).

2. Procédé selon la revendication 2, dans lequel T est au moins quatre fois la durée de vie de la vague dans la voie d'eau (8).

3. Procédé selon la revendication 1 ou 2, dans lequel, à l'étape S6, l'ouverture déterminée à l'étape S1 est complètement supprimée.

4. Procédé selon la revendication 1 ou 2, dans lequel, au pas S6, pour établir la vitesse à laquelle l'ouverture déterminée au pas S1 est effectuée, on utilise un parmètre H, le parmètre H étant la course de l'activité du fermer qui a eu lieu dans l'intervalle de temps précédent.

5. Procédé selon l'une des revendications 1, 2 ou 4, dans lequel, à l'étape S6, on utilise un paramètre m pour établir la vitesse à laquelle l'ouverture déterminée à l'étape S1 est effectuée, le paramètre m étant la vitesse de l'activité du fermer qui a eu lieu dans l'intervalle de temps précédent.

6. Procédé selon l'une des revendications 1, 2, 4 ou 5, dans lequel, à l'étape S6, pour établir la vitesse à laquelle l'ouverture déterminée à l'étape S1 est effectuée, on utilise un paramètre t_{SE} , le paramètre t_{SE} étant l'instant qui se situe à la fin de l'activité du fermer qui a eu lieu dans l'intervalle de temps précédent.

7. Procédé selon l'une quelconque des revendications précédentes, dans lequel, au pas S6, on détermine le moment t_{SE} qui se situe à la fin de l'activité du fermer qui a eu lieu dans l'intervalle de temps précédent, et dans lequel la limitation de vitesse d'ouverture est maintenue au pas S6 pendant au moins une durée donnée par t -t_{SE0} +T.

8. Procédé selon l'une quelconque des revendications 1 à 6, dans lequel la vitesse d'ouverture est maintenue à l'étape S6 pendant une durée Δt prédéterminée, et dans lequel, une fois la durée Δt écoulée, les étapes du procédé sont à nouveau suivies.

9. Procédé selon l'une des revendications précédentes, dans lequel, en cas de panne de courant, une fermeture rapide de la turbine Pelton est automatiquement effectuée.

10. Turbine Pelton comprenant un rotor (1), au moins une buse (3), une voie d'eau (8) et un dispositif de commande (4) pour commander un degré d'ouverture de la buse (3), dans laquelle le rotor (1) comprend une pluralité de godets (2), et dans laquelle la turbine Pelton comprend des moyens mécaniques pour réaliser une loi de commande à un seul étage, ce qui permet de limiter la vitesse de réglage de la buse (3) à une vitesse de réglage maximale autorisée, et dans lequel la turbine Pelton comprend des moyens adaptés pour mettre en oeuvre les procédés selon l'une quelconque des revendications 1 à 9.

11. Turbine Pelton selon la revendication 10, dans laquelle la turbine Pelton comprend un dispositif de contrôle (6) pour surveiller le dispositif de commande (4).

12. Programme informatique comprenant des instructions qui amènent le dispositif de la revendication 10 ou 11 à exécuter les étapes du procédé selon l'une quelconque des revendications 1 à 9.

13. Support lisible par ordinateur sur lequel est stocké le programme d'ordinateur selon la revendication 12.
